# FASCICULE DE BREVET EUROPEEN

(11) **EP 2 926 977 B1**
(45) Date de publication et mention de la délivrance du brevet: **08.08.2018**
(21) Numéro de dépôt: 15161772.7
(22) Date de dépôt: 30.03.2015
(51) Int. Cl.: B29C 65/08, B65B 51/22, B65B 51/30, B29C 65/18, B29C 65/26, B29C 65/30, B29C 65/72, B29C 65/74

(54) **DISPOSITIF DE SOUDURE PAR ULTRASONS**
ULTRASCHALL-SCHWEISSVORRICHTUNG
ULTRASONIC WELDING DEVICE

(30) Priorité: 01.04.2014 FR 1452856
(43) Date de publication de la demande: 07.10.2015
(73) Titulaire: Sonimat, 86140 Lencloitre (FR)
(72) Inventeur: Beauvy, Lionel, 44300 Nantes (FR); Violleau, Eric, 86100 Cuhon (FR)
(74) Mandataire: Nony

(56) Documents cités:
- EP-A1- 2 113 370
- WO-A1-93/01091

## Description

La présente invention concerne un dispositif de soudure par ultrasons, et plus particulièrement mais non exclusivement, un dispositif utilisé dans le cadre du conditionnement de produits en sachets en matière thermoplastique.

Dans le milieu alimentaire notamment, la durée de vie du produit ensaché dépend de l'étanchéité du sachet. Cette étanchéité est assurée par la qualité du film employé pour le réaliser et par celle des soudures effectuées pour fermer le sachet. Ce dernier contient non seulement le produit alimentaire, mais souvent également un gaz inerte qui empêche son oxydation. Une soudure défectueuse entraine un échange entre l'extérieur et l'intérieur, produisant une détérioration prématurée de l'aliment.

Dans le cas du conditionnement de salade ou de crudités en sachets, il est ainsi de pratique courante de prévoir un opérateur pour vérifier la bonne étanchéité de la fermeture en appuyant manuellement sur chaque sachet, ceux-ci étant trop fragiles pour soumettre facilement cette opération à un automate.

Les dispositifs de soudure à ultrasons comportent de façon générale une sonotrode et une enclume entre lesquelles sont serrées au moins deux épaisseurs à souder l'une sur l'autre.

La sonotrode produit une énergie vibratoire qui provoque la fusion locale de la matière le long d'au moins une ligne de soudure.

Il a été proposé diverses géométries de sonotrode et d'enclume afin notamment de réaliser deux lignes de soudure parallèles entre elles, transversales à la direction de déplacement des sachets à souder. La première ligne de soudure sert à fermer l'ouverture de remplissage du sachet aval et la deuxième le fond du sachet amont, avant son remplissage.

Les deux lignes de soudure sont espacées de plusieurs millimètres afin de permettre l'action d'une lame de découpe qui sert à séparer les deux sachets ou à préparer la séparation des deux sachets.

Les publications EP 1 354 693 A2, HR 2010 0498, DE 2004 013049, DE 102004013050 et US 2008/0105385 A1 décrivent des dispositifs de soudure à ultrasons comportant une sonotrode et une enclume en vis-à-vis.

Dans la demande US 2008/0105385 A1, l'enclume est double, de façon à réaliser les deux lignes de soudure, et portée par un support articulé. Un organe de poussée la sollicite en direction de la sonotrode. Plusieurs dispositifs de soudure identiques peuvent être montés côte à côte, pour souder en parallèle plusieurs sachets.

Pour faire face aux variabilités des films plastiques soudés, et aux évolutions géométriques en cours de cycle, notamment dues aux phénomènes de dilatation, différents industriels ont intégré dans le dispositif de soudage un système qui permet d'ajuster la distance entre l'enclume et la sonotrode, permettant ainsi de garantir un soudage correct tout au long de la bobine, comme illustré dans les publications US2009 250171 ou JPS5787323.

D'autres systèmes également ont été développés, tels que décrits dans CN2016327761, permettant de maintenir un effort constant à l'aide de ressorts, pour garantir un pincement homogène des films soudés.

Tous ces dispositifs déplacent de manière simultanée les deux surfaces de contre-appui situées en regard de la sonotrode et destinées à réaliser les deux lignes de soudure.

Par conséquent, ces systèmes nécessitent un réglage de parallélisme fin entre la sonotrode et ces surfaces de contre-appui. De plus, pour maintenir ce parallélisme au cours de l'utilisation de la machine, le système doit être très robuste et rigide. Chaque défaut de réglage de parallélisme entraine une variation de la contrainte résiduelle dans le film et donc impacte le niveau d'énergie transféré par la sonotrode.

Une autre solution pour réduire le risque de défaut d'étanchéité consiste à utiliser un film plus épais, moins sensible aux défauts de parallélisme, avec l'inconvénient d'augmenter le coût matière et l'empreinte carbone.

Le brevet US 7958924 prévoit la possibilité de monter l'enclume double destinée à réaliser les lignes de soudure sur un support pivotant. Les surfaces de contre-appui destinées à venir au contact du film à souder se déplacent toujours ensemble, de la même façon, accompagnant le mouvement de l'enclume double.

La demande EP 2 113 370 divulgue un dispositif dans lequel l'enclume est montée sur des rotules qui lui permettent de pivoter. Les deux lignes de soudure sont définies par des reliefs de l'enclume qui se déplacent ensemble avec celle-ci, et non de façon indépendante l'un de l'autre. De plus, la présence des rotules complique la fabrication.

Il existe un besoin pour accroître les cadences de production, diminuer le coût matière des conditionnements tout en maintenant la fiabilité de l'assemblage au niveau requis.

L'invention vise à perfectionner encore les dispositifs de soudure par ultrasons existants, et à notamment bénéficier d'un dispositif de soudure fiable, performant et remédiant à tout ou partie des inconvénients de l'art antérieur.

Elle y parvient grâce à un dispositif de soudure par ultrasons d'une structure suivant la revendication 1. Cela permet, en cas de besoin, à l'un des entrefers de varier différemment de l'autre entrefer au cours de l'opération de soudure. Chaque enclume peut se déplacer indépendamment de l'autre enclume au contact de la structure flexible, ce qui assure une meilleure compensation des variations éventuelles d'épaisseur de celle-ci que dans l'art antérieur.

Par "au moins partiellement mobile", il faut comprendre une mobilité d'ensemble de la sonotrode ou de l'enclume par rapport à la structure de support correspondante, ou une mobilité seulement partielle. Dans ce dernier cas, réservé de préférence à une enclume, celle-ci est capable de se déformer pour permettre à la surface venant en appui sur la structure flexible de reculer localement sous l'effet de la poussée exercée par la sonotrode. Cette possibilité de déformation est par exemple obtenue en créant une ou plusieurs zones flexibles au sein de l'enclume.

Par "entrefer", on désigne l'intervalle entre une sonotrode et une enclume en regard.

Par "enclume", on désigne la partie du dispositif qui définit la surface de contre-appui pour la sonotrode lors de l'opération de soudage.

La mobilité de la sonotrode ou de l'enclume par rapport à la structure de support se fait selon au moins un degré de liberté, et mieux selon deux degrés de liberté, comme détaillé plus loin.

Lorsque l'épaisseur de la structure flexible est constante, les surfaces de la ou des sonotrodes et de la ou des enclumes venant en appui sur la structure flexible peuvent être parallèles à un plan médian pour la structure flexible. Si par contre l'épaisseur de la structure flexible varie ou que du produit est présent (par exemple un morceau de légume coincé entre les épaisseurs à souder), au moins l'un des entrefers peut être différent de l'autre entrefer en réponse à cette variation d'épaisseur, lors de l'opération de soudage, et les deux entrefers sont par exemple de valeurs différentes sur toute leur longueur, les valeurs étant constantes pour chaque entrefer ou variables le long d'au moins un entrefer.

Si l'enclume ou la sonotrode possède un degré de liberté en translation d'avant en arrière, cela permet de s'adapter à une variation d'épaisseur dans le sens longitudinal de la structure flexible. Dans ce cas, les enclumes reculent par exemple différemment par rapport à la sonotrode, lors de l'opération de soudage. Un degré de liberté en rotation autour d'un axe parallèle à la direction de défilement de la structure flexible permet de s'adapter à une variation d'épaisseur dans le sens de la largeur de la structure flexible.

Ainsi, grâce à l'invention, il est possible de souder une structure flexible relativement fine, malgré sa variabilité, tout en obtenant une bonne étanchéité de la soudure.

L'invention s'applique avantageusement à la fermeture de sachets contenant un produit alimentaire tel que des feuilles de salade ou des crudités, par exemple, ou un produit pulvérulent.

La possibilité de variation différente d'un entrefer par rapport à l'autre au cours de l'opération de soudage permet de compenser des défauts de réglage du positionnement initial de la ou des enclumes relativement à la ou aux sonotrodes.

Ainsi, le réglage initial de chaque entrefer peut être moins précis, ce qui permet de gagner du temps lors de la mise en route du dispositif.

L'invention permet de pincer de manière certaine les épaisseurs à souder sans engendrer de sur- ou de sous- contrainte dans lesdites épaisseurs, et ce malgré les éventuels petits défauts de réglage ou évolutions de ceux-ci, inévitables en milieu industriel.

L'invention permet en outre un ajustement, notamment automatique, du jeu entre la sonotrode et l'enclume lorsque chaque enclume vient en appui, via les épaisseurs à souder, contre la sonotrode associée.

Ceci permet de s'affranchir d'un défaut de parallélisme entre la sonotrode et l'enclume et de faire face aux variabilités d'épaisseur dans la longueur de la bobine et/ou dans sa largeur, comme expliqué ci-dessus, selon le ou les degrés de liberté dont bénéficient la sonotrode et/ou l'enclume.

L'épaisseur du film en matière thermoplastique servant à réaliser les sachets va par exemple de 5 à 1000 µm, mieux de 20 à 200 µm, mieux encore de 20 à 50 µm.

De préférence, les deux entrefers sont définis par une même sonotrode et par deux enclumes, lesquelles peuvent se déplacer indépendamment l'une de l'autre par rapport à la sonotrode. Il peut être plus simple de monter une enclume avec un ou deux degrés de liberté par rapport à une structure de support correspondante qu'une sonotrode, laquelle est couplée à un générateur qui peut s'avérer relativement encombrant.

Il existe plusieurs façons de déplacer cycliquement une enclume relativement à une sonotrode, entre une position éloignée permettant le défilement de la structure flexible et une position rapprochée pendant laquelle a lieu l'opération de soudure.

De préférence, à la fois la ou les enclumes et la ou les sonotrodes sont déplacées, de préférence simultanément, relativement à un plan médian, en s'éloignant et en se rapprochant de façon cyclique de ce plan médian. Cela permet de faire défiler la structure flexible de façon centrée dans ce plan médian, ce qui facilite l'obtention de lignes de soudure perpendiculaires à la direction de défilement de la structure flexible.

Ainsi, de préférence, à la fois la ou les sonotrodes et la ou les enclumes sont mobiles dans une direction sensiblement perpendiculaire à une direction de défilement de la structure au sein du dispositif.

En variante, il est possible d'avoir une ou plusieurs sonotrodes montées sur un support fixe et une ou plusieurs enclumes montées sur un support mobile par rapport à celui de la ou des sonotrodes. Dans ce cas, le mouvement du support de la ou des enclumes peut pousser la structure flexible contre la ou les sonotrodes.

En variante encore, il est possible d'avoir une ou plusieurs enclumes montées sur une structure de support fixe et une ou plusieurs sonotrodes montées sur une structure de support mobile par rapport à celle de la ou des enclumes.

De préférence, dans le cas où le dispositif comporte une sonotrode et deux enclumes, l'une au moins des enclumes est déplaçable, relativement à la structure de support qui la porte, en translation dans une direction la rapprochant ou l'éloignant de la sonotrode, et de préférence encore chacune des enclumes est déplaçable en translation, relativement à la structure de support, dans une direction la rapprochant ou l'éloignant de la sonotrode.

De préférence, l'une au moins d'une enclume et d'une sonotrode définissant un entrefer est libre de pivoter, de préférence dans un plan perpendiculaire à une direction de défilement de la structure flexible au sein du dispositif. Ainsi, l'intervalle défini entre l'enclume et la sonotrode peut varier dans le sens de la largeur de la structure flexible, lors de l'opération de soudure notamment. Cela permet de compenser une éventuelle variation de l'épaisseur de la structure flexible à souder, variation qui peut être liée au fait que l'épaisseur du film avec lequel la structure est réalisée varie. Cela permet d'obtenir une bonne qualité de soudure même lorsque l'épaisseur de film est relativement faible.

Chacune des enclumes et/ou sonotrodes est de préférence libre de pivoter, de préférence dans un plan perpendiculaire à une direction de défilement de la structure au sein du dispositif.

Ainsi, dans un exemple de mise en oeuvre préféré de l'invention, comportant deux enclumes mobiles chacune par rapport à une structure de support indépendamment l'une de l'autre, chaque enclume est montée pivotante relativement à ladite structure de support et les deux enclumes peuvent pivoter indépendamment l'une de l'autre relativement à ladite structure de support. Les deux enclumes peuvent pivoter dans des plans respectifs qui sont parallèles entre eux.

La possibilité de pivotement de la ou de chaque enclume et/ou de la ou de chaque sonotrode peut être obtenue grâce à un jeu de guidage de la ou de chaque enclume et/ou de la ou de chaque sonotrode, relativement au support correspondant.

Le guidage est par exemple obtenu par des guides coulissant dans des douilles, et l'on peut prévoir entre les deux un jeu radial suffisant pour autoriser le débattement angulaire souhaité, lequel est de préférence inférieur à 5°.

De préférence, le guidage est assuré à l'aide de chariots à billes qui peuvent se déplacer sur des rails de guidage. Dans ce cas, les chariots se déplacent par exemple avec les enclumes sur les rails de guidage qui restent fixes relativement à la structure de support.

La possibilité de pivotement de l'enclume peut ainsi être obtenue grâce à un jeu de guidage entre ces rails et chariots à billes, lesquels peuvent être au moins au nombre de deux ou trois par enclume.

L'enclume ou la sonotrode libre de pivoter peut ainsi se déplacer lors de l'opération de soudure avec une composante en translation dans l'axe de guidage, et une composante en rotation dans le plan contenant l'axe de guidage, au cours de son déplacement selon l'axe de guidage.

Ainsi, dans l'exemple de mise en oeuvre préféré ci-dessus, chaque enclume peut coulisser avec un jeu de guidage suffisant pour autoriser un léger débattement angulaire, de préférence inférieur à 5° et plus généralement compris entre 0,01 et 1°, dans un plan qui est sensiblement perpendiculaire à la direction de déplacement de la structure flexible dans l'entrefer. Lorsque l'enclume est initialement horizontale, son pivotement éventuel intervient dans un plan horizontal. Un pivotement dans le sens haut bas n'a pas d'intérêt, il peut cependant en résulter un du fait même de la liberté mécanique générée. Le mieux est de bloquer au maximum ce dernier par un guidage tolérant dans la seule direction transverse souhaitée. Chaque enclume possède alors deux degrés de liberté relativement à la structure de support, l'un en translation, l'autre en rotation.

L'intérêt d'utiliser des chariots de guidage à billes comme mentionné plus haut est que ces derniers permettent un débattement angulaire dans le plan de déplacement plus important que le débattement vers le haut ou le bas.

La structure de support des enclumes peut comporter une traverse qui se déplace de façon alternée en translation entre une position rapprochée de la sonotrode, et une position éloignée de celle-ci. Ce déplacement peut avoir lieu à une vitesse variable, et notamment à une vitesse réduite lors de l'opération de soudure, lorsque la sonotrode dispense une énergie plus élevée.

De préférence, le dispositif comporte au moins un organe de rappel élastique pour solliciter en rapprochement l'un de l'autre l'enclume et la sonotrode associées à un même entrefer. De préférence encore, au moins l'une des enclumes, et mieux chacune des enclumes, est sollicitée élastiquement en direction de la même sonotrode, de préférence par au moins un ressort hélicoïdal. Avantageusement, au moins l'une des enclumes, et mieux chaque enclume, est ainsi sollicitée en direction de la sonotrode par au moins deux ressorts de rappel, de préférence hélicoïdaux, disposés de part et d'autre d'un plan médian de l'enclume, qui est par exemple un plan vertical lorsque l'enclume est horizontale. Chaque enclume peut notamment être sollicitée par au moins trois ressorts, dont l'un a son axe situé dans un plan médian de l'enclume et les deux autres sont disposés de façon symétrique par rapport à ce plan médian. L'utilisation d'au moins trois ressorts permet d'appliquer un effort bien réparti sur la largeur de la structure flexible.

Les ressorts sont dimensionnés suivant l'effort de pression requis pour effectuer la soudure. L'effort nécessaire à la soudure est généralement de quelques Newtons par millimètre linéaire de soudure. Les machines du marché ont généralement des largeurs de soudure comprises entre 5et 400 mm, ce qui amène de préférence à des efforts par ligne de soudure de l'ordre de 200 à 3 000 N environ, selon l'épaisseur et le matériau du film à souder. Chaque ressort peut ainsi, par exemple exercer une force maximale de 10.000 N sur l'enclume ou la sonotrode.

L'invention permet, de proposer un outillage moins rigide, car auto-adaptatif du fait de l'utilisation de moyens de rappel élastique à effort contrôlé, répartis sur la zone de soudure, notamment les ressorts précités.

De préférence, les deux enclumes sont guidées, chacune, par un moyen de guidage indépendant, et l'effort exercé par les ressorts ou autres organes de rappel élastique peut être différencié pour chaque enclume.

Le dispositif selon l'invention comporte de préférence des moyens de réglage d'une position de repos dans laquelle est sollicitée l'enclume ou la sonotrode par le ou les organes de rappel élastique, lorsque la sonotrode et l'enclume sont éloignées, entre deux opérations de soudure, notamment des butées à vis.

Un préréglage de butée permet avantageusement de dégrossir le parallélisme longitudinal. Il peut être assuré par deux vis de part et d'autre d'un plan médian de chaque enclume servant de butée contre la poussée des ressorts. Le fait de desserrer ou de serrer le coté droit ou le coté gauche permet donc de modifier le parallélisme initial entre la sonotrode et l'enclume. Ceci permet de minimiser l'enfoncement nécessaire pour obtenir un plaquage correct et rapide contre la structure flexible.

De préférence, le dispositif selon l'invention comporte au moins une partie d'un dispositif de coupe disposé entre les deux enclumes. Ce dispositif de coupe peut être actionné pour séparer en deux la structure flexible, le long d'une ligne de coupe s'étendant entre les deux lignes de soudure associées auxdites enclumes, ou pour réaliser une prédécoupe.

Lorsqu'observée en section transversale, la surface de l'enclume qui va venir en appui contre la surface à souder présente de préférence un rayon de courbure supérieur ou égal à 0,1 mm.

Lorsque le dispositif comporte deux enclumes et une sonotrode, cette dernière peut présenter deux avancées qui sont disposées chacune en regard d'une enclume correspondante, et qui définissent avec un bord avant de celle-ci un entrefer. Ces deux avancées peuvent être séparées par une gorge qui peut accueillir le dispositif de coupe précité.

Lorsque le dispositif comporte deux sonotrodes, celles-ci peuvent être disposées avec leurs axes faisant un angle non nul entre eux.

Par exemple, l'une des sonotrodes a son axe qui est perpendiculaire à la direction de défilement de la structure flexible dans l'entrefer, et l'autre sonotrode a son axe qui fait un angle aigu avec l'axe de la première sonotrode, et s'étend dans un plan perpendiculaire à la structure flexible dans l'entrefer.

Les deux sonotrodes peuvent présenter des bords biseautés destinés à contacter la structure flexible.

De préférence, chaque enclume est régulée en température, notamment par une circulation d'un fluide au sein d'au moins un canal interne à l'enclume.

De préférence, les enclumes comportent des moyens de chauffage qui permettent de les maintenir dans une plage de température prédéfinie, de préférence comprise entre 10 et 30°C, lors du fonctionnement du dispositif de soudure, lequel peut s'opérer par exemple dans un environnement relativement froid en raison de la nature alimentaire des produits conditionnés.

D'une façon générale, il est ainsi possible de réguler la température des enclumes soit pour les refroidir suite au transfert de calories opéré par la structure flexible en contact lorsqu'elle est en fusion, soit pour les réchauffer de façon à éviter un refroidissement trop rapide de la zone soudée qui pourrait entrainer une modification du taux de cristallinité de la matière plastique, modifiant ses propriétés physicochimiques. Pour ce faire, par exemple, cette régulation de température est réalisée à l'aide d'un liquide caloporteur circulant dans des cavités réalisées à cet effet dans les enclumes, comme évoqué ci-dessus, ou bien encore à l'aide d'au moins un élément chauffant, comme par exemple une ou plusieurs cartouches chauffantes, inséré dans ou fixé extérieurement sur une surface de l'enclume.

La fréquence des ultrasons est de préférence comprise entre 15 et 80 kHz, mieux entre 15 et 40 kHz, par exemple autour de 20 kHz, avec des amplitudes de vibration crête à crête préférentiellement comprises entre 5 et 200 µm, mieux entre 20 et 80 µm.

L'invention a encore pour objet, indépendamment ou en combinaison avec ce qui précède, un dispositif de soudure par ultrasons d'une structure flexible, comportant :
- une sonotrode, préférentiellement en alliage de titane ou plus largement en matériau métallique, celle-ci pouvant être ou non revêtue ou traitée, entièrement ou partiellement,
- deux enclumes portées par une structure de support, cette structure de support étant mobile relativement à la sonotrode, entre une position écartée et une position rapprochée, au moins l'une des enclumes étant mobile relativement à la structure de support et amenée à se déplacer relativement à celle-ci sous l'effet d'une poussée exercée par la sonotrode lorsque la structure de support est dans la position rapprochée, et de préférence chaque enclume est mobile relativement à la structure de support sous l'effet de ladite poussée, le déplacement de la ou des enclumes relativement à la structure de support s'effectuant de préférence contre l'action de rappel d'au moins un organe de rappel élastique, de préférence encore avec deux degrés de liberté, l'un en translation et l'autre en rotation.

L'invention a encore pour objet un procédé de soudure par ultrasons d'une structure flexible, à l'aide d'un dispositif selon l'invention, tel que défini ci-dessus, dans lequel on effectue simultanément deux lignes de soudure parallèles en pinçant la structure à souder dans chaque entrefer entre la sonotrode et l'enclume correspondante.

La structure flexible peut être formée d'un film en matière thermoplastique, notamment monocouche. L'épaisseur du film peut être comprise entre 10 et 100 microns comme mentionné plus haut, étant par exemple de l'ordre de 40 µm ou moins.

La variabilité de l'épaisseur du film par rapport à son épaisseur nominale peut dépasser +/-5%, sur la longueur du film mais également sur sa largeur.

Les sachets qui sont fermés par soudure peuvent contenir un produit alimentaire, notamment des feuilles de salade ou crudités ou bien tout autre produit, notamment pulvérulent.

De préférence, au moins l'une des enclumes, et de préférence chaque enclume, est déplacée relativement à une structure de support de cette ou ces enclumes par appui indirect contre la sonotrode, lors de la réalisation des lignes de soudure.

Chaque enclume peut être rappelée en appui contre la sonotrode par une force de rappel qui maintient une pression d'appui constante ou variable, selon le besoin.

Au cours du fonctionnement du dispositif, dans un exemple préféré de mise en oeuvre de l'invention, la sonotrode vient enfoncer chaque enclume. Les enclumes peuvent s'aligner, lors de leur déplacement, avec la sonotrode. L'effort appliqué sur les enclumes par le ou les organes de rappel élastique devient l'effort de soudure.

Chaque ligne de soudure peut s'étendre sur une distance comprise entre 5 et 400 mm.

De préférence, la température des enclumes est régulée, comme mentionné plus haut.

L'invention pourra être mieux comprise à la lecture de la description détaillée qui va suivre, d'exemples de mise en oeuvre non limitatifs de celle-ci, ainsi qu'à l'examen du dessin annexé, sur lequel :
- la figure 1 illustre de façon schématique, sur le plan cinématique, un exemple de dispositif selon l'invention,
- la figure 2 illustre la formation des sachets, en enroulant et repliant sur lui-même un film de matière thermoplastique,
- la figure 3 illustre différentes étapes de fonctionnement du dispositif,
- la figure 4 représente, de façon schématique et partielle, un exemple de dispositif de soudure selon l'invention,
- la figure 5 représente le dispositif de la figure 4, avec coupe partielle dans le plan d'une enclume contenant l'axe des guides,
- la figure 6 est une coupe selon VI-VI de la figure 5,
- la figure 7 est une coupe selon VII-VII de la figure 5,
- les figures 8 et 9 sont deux vues en perspective, avec transparence partielle, de détails de réalisation du dispositif de la figure 4,
- les figures 10 et 11 sont des vues analogues à la figure 4 de variantes de réalisation du dispositif, et
- la figure 12 représente isolément, en perspective, une variante de réalisation d'enclume.

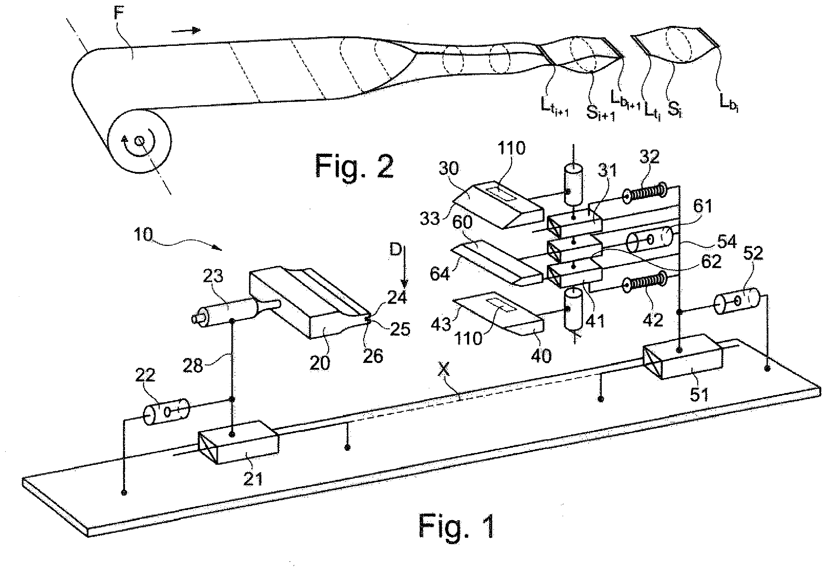

Un dispositif de soudure 10 à ultrasons selon l'invention peut comporter, comme illustré à la figure 1, une sonotrode 20 et un ensemble de deux enclumes 30 et 40 destinées à définir chacune une surface de contre-appui lors de la soudure d'une structure flexible, pouvant défiler dans une direction D, par exemple du haut vers le bas, entre chaque opération de soudure.

De préférence, comme illustré, la sonotrode 20 et les enclumes 30, 40 peuvent se déplacer le long d'une même direction X, qui est par exemple horizontale, au cours du fonctionnement du dispositif ; à cet effet, la sonotrode 20 est portée par une structure de support 28 qui peut être guidée dans son déplacement parallèlement à l'axe X par tout mécanisme de guidage adapté 21, et peut être mue par tout actionneur adapté 22, par exemple un vérin électrique, pneumatique ou hydraulique.

De même, les enclumes 30 et 40 sont portées par une structure de support 54 qui peut être guidée par tout mécanisme de guidage 51 adapté dans son déplacement le long de l'axe X, et qui peut être mue par tout actionneur adapté 52, tel que par exemple un vérin électrique, pneumatique ou hydraulique,

Il est possible d'utiliser un même actionneur pour rapprocher ou éloigner les enclumes 30 et 40 de la sonotrode 20.

Ainsi, les actionneurs 22 et 52 peuvent être remplacés par un unique actionneur et par un mécanisme adapté pour transformer le mouvement de cet actionneur en un rapprochement des enclumes de la sonotrode ou inversement, de façon cyclique.

La sonotrode 20 est connue en elle-même ; elle est couplée à tout générateur d'ultrasons 23 adapté, par exemple de fréquence de l'ordre de 20 kHz.

La sonotrode 20 est par exemple réalisée en titane ou en aluminium.

L'axe de la sonotrode 20 peut être parallèle à l'axe X de déplacement, ou en variante faire un angle non nul avec celui-ci.

Chaque enclume 30 ou 40 est mobile relativement à la structure de support 54 avec une possibilité de déplacement relativement à celui-ci dans une direction parallèle à l'axe X, cette liberté de déplacement étant assurée par une structure de guidage respective 31 ou 41.

Il est avantageux, comme illustré, que chaque enclume 30 ou 40 soit mobile dans la direction X par rapport à la structure de support 54 contre l'action de rappel d'un moyen de rappel élastique respectif 32 ou 42, qui tend à la solliciter en déplacement vers la sonotrode 20.

Le déplacement de chaque enclume 30 ou 40 relativement à la structure de support 54 peut s'effectuer indépendamment de celui de l'autre enclume, sous l'effet d'une poussée exercée par la sonotrode 20, qui tend à déformer le moyen de rappel élastique correspondant 32 ou 42.

Conformément à une caractéristique préférée de mise en oeuvre de l'invention, chaque enclume 30 ou 40 est également montée relativement à la structure de support 54 avec une possibilité de pivotement dans un plan qui est perpendiculaire à la direction de défilement D. Ainsi, chaque enclume 30 ou 40 possède deux degrés de liberté dans son déplacement, l'un en translation, l'autre en rotation, ce qui lui permet de s'aligner avec la sonotrode 20 lors de l'opération de soudure et de maîtriser l'effort exercé sur la structure flexible à souder.

Le dispositif de soudure 10 peut comporter, comme illustré, un organe de coupe 60 disposé entre les enclumes 30 et 40, cet organe de coupe 60 pouvant être actionné indépendamment des enclumes 30 et 40 par un actionneur propre 61, qui permet, de le déplacer en direction de la sonotrode 20 relativement à la structure de support 54, lorsque la structure flexible doit être découpée, par exemple pour séparer un sachet venant d'être fermé du suivant.

L'organe de coupe 60 est de préférence, comme illustré, guidé en déplacement parallèlement à l'axe X par un moyen de guidage adapté 62.

La structure flexible qui est soudée à l'aide du dispositif 10 est par exemple, comme illustré à la figure 2, formée à partir d'un film F en matière thermoplastique, qui est d'abord conformé en tube, puis fermé à intervalles réguliers selon des lignes de soudure transversales.

Dans le sens longitudinal, le tube peut être formé par simple recouvrement des deux épaisseurs de film, ou en variante de trois épaisseurs lorsque l'un des bords est replié sur lui-même dans la zone où il se superpose à l'autre bord.

Au cours du fonctionnement du dispositif 10, on réalise à la fois la ligne de soudure Lₜᵢ pour fermer l'ouverture supérieure d'un sachet rempli Sᵢ, dont on a précédemment réalisé la soudure de fond L_{bi}, et la ligne de soudure de fond L_{bi+1} du sachet suivant Sᵢ₊₁, destiné à être rempli.

La soudure de l'ouverture d'un sachet venant d'être rempli et la soudure de fond d'un sachet devant être rempli sont réalisées simultanément en utilisant les enclumes 30 et 40 respectivement, et l'organe de coupe 60 est actionné après réalisation des soudures correspondantes pour séparer le sachet aval Sᵢ du sachet amont Sᵢ₊₁.

Lorsque la sonotrode 20 et les enclumes 30, 40 sont rapprochées, la structure flexible est pincée entre la sonotrode 20 et le bord avant 33, 43 des enclumes 30 et 40.

Plus particulièrement, dans l'exemple illustré, la sonotrode 20 présente deux avancées 24 et 25 destinées respectivement à venir en regard des bords 33 et 43, et une gorge 26 séparant les avancées 24, 25, dans laquelle peut s'engager la lame 64 de l'organe de coupe 60 lors de l'opération de coupe.

Lors de l'opération de soudure, les enclumes 30 et 40 appliquent sur la structure flexible un effort contrôlé, qui est imposé par les moyens de rappel élastique 32, 42.

On évite ainsi d'exercer une sous- ou une sur- contrainte sur les épaisseurs de film à souder, ce qui permet d'obtenir une grande qualité de soudure de manière reproductible.

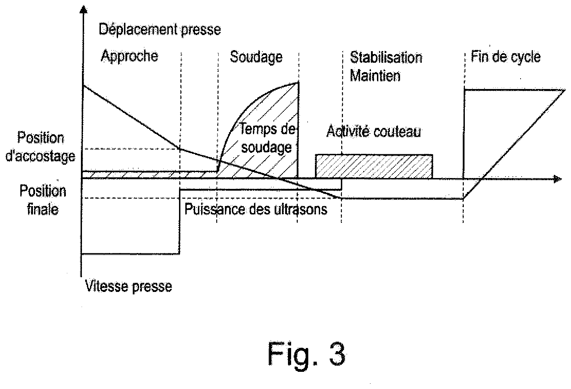

Si l'on se reporte au schéma de la figure 3, on voit que la vitesse de déplacement de la sonotrode 20, lors du rapprochement des enclumes 30, 40, peut être négative avec une amplitude relativement grande, dans une phase d'approche, puis être réduite tout en restant négative à partir d'une position dite d'accostage, jusqu'à l'atteinte d'une position finale. La position d'accostage correspond à la position de passage en vitesse de soudure avant le contact de la sonotrode et des enclumes avec la structure flexible à souder. Au cours de la phase de soudage, la position de la sonotrode devient négative, c'est-à-dire qu'elle franchit le plan médian, ce qui correspond, dans la pratique, à la poursuite du recul des enclumes 30, 40 relativement à la structure de support 54 sous la poussée exercée par la sonotrode 20. Ce recul débute dès le début de la soudure et est plus ou moins important selon la régularité d'épaisseur de la structure flexible ou la présence de plis ou de corps étranger entre les deux épaisseurs de la structure flexible. Ce recul s'opère contre l'action de rappel des moyens de rappel élastiques 32, 42 associés.

La puissance des ultrasons augmente pendant la phase de soudage.

Ensuite, dans une phase intitulée "activité couteau", le moyen de coupe 60 est actionné pour séparer les deux lignes de soudure nouvellement formées ou réaliser une prédécoupe.

La vitesse négative réduite de la sonotrode se prolonge après la fin du temps de soudage, jusqu'à une phase dite de "stabilisation maintien", où elle devient nulle.

L'organe de coupe est actionné soit pendant la phase de soudure soit pendant la phase de stabilisation maintien.

A partir de la fin de la phase de stabilisation maintien, la vitesse de la sonotrode prend une valeur positive relativement grande, qui correspond à l'éloignement rapide de la sonotrode 20 et des enclumes 30, 40, et au lancement d'un nouveau cycle pour le sachet suivant.

De préférence, on effectue une régulation de la température des enclumes, à l'aide d'une circulation d'un fluide au sein des enclumes ou d'un élément chauffant tel qu'une cartouche chauffante 110, représentée schématiquement à la figure 1.

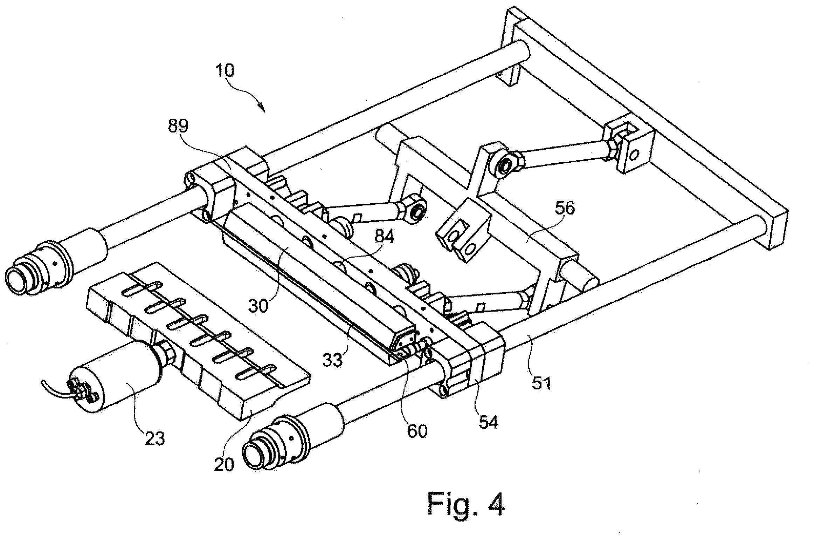

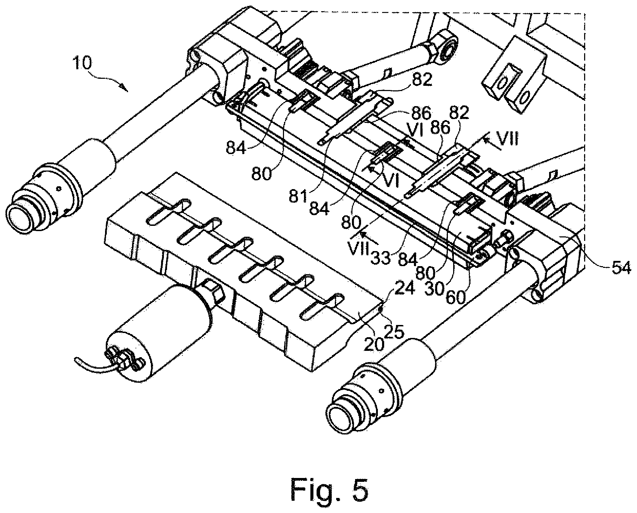

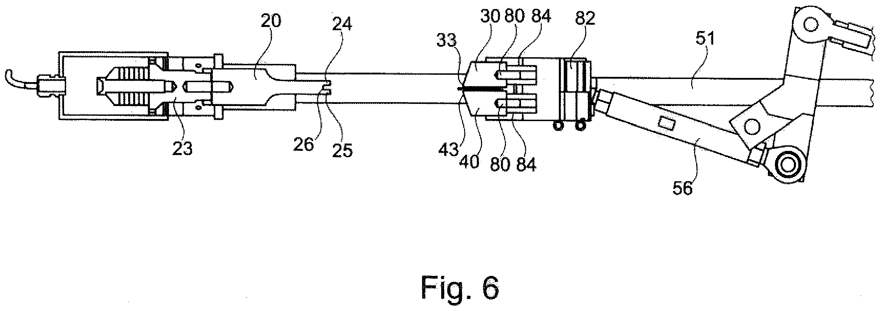

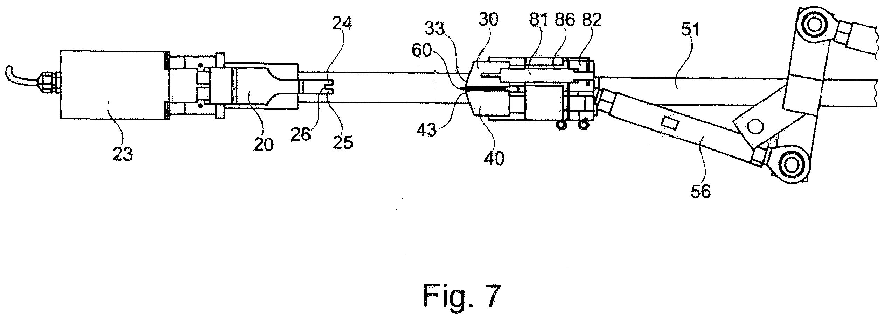

On a représenté sur les figures 4 à 9 un exemple de mise en oeuvre de l'invention, où l'on a précisés certains des moyens décrits de manière fonctionnelle en référence à la figure 1.

Le mécanisme de guidage 51 comporte par exemple, comme illustré, deux tiges parallèles sur lesquelles peut coulisser la structure de support 54, l'actionneur 52 opérant par exemple par l'intermédiaire d'un mécanisme 56 à bielle-manivelle qui n'a été que partiellement représenté.

Dans l'exemple illustré, chaque enclume 30 ou 40 est guidée relativement à la structure de support 54 par un ensemble de deux guides 81 d'axes parallèles, coulissant dans des douilles 86. Ces dernières sont fixes relativement à la structure de support 54, étant par exemple, comme illustré, fixées dans des alésages d'une traverse 89 de la structure de support 54. Les guides 81 sont munis de butées arrière réglables 82, permettant de régler la position initiale de l'enclume correspondante relativement à la structure de support 54, d'avant en arrière selon l'axe X, et en rotation dans le sens horaire ou antihoraire autour d'un axe parallèle à la direction D de déplacement de la structure flexible. Chaque guide 81 peut se déplacer vers l'arrière relativement à la traverse 89. Son déplacement vers l'avant est limité par la butée 82, qui vient en appui sur la face arrière de la traverse.

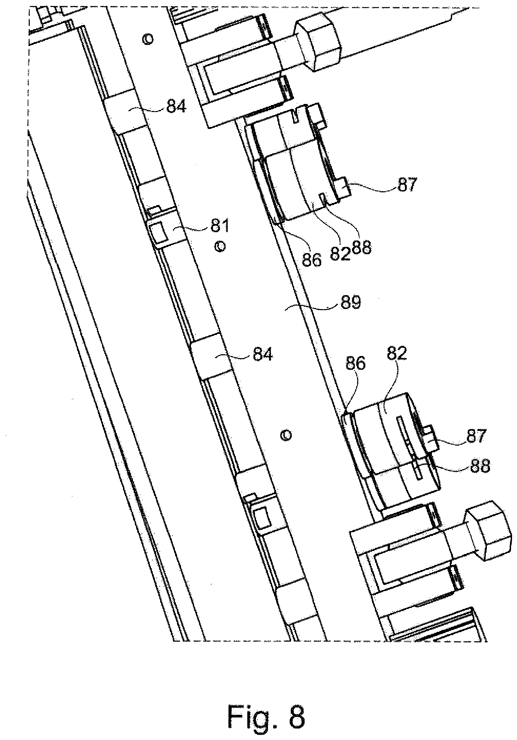

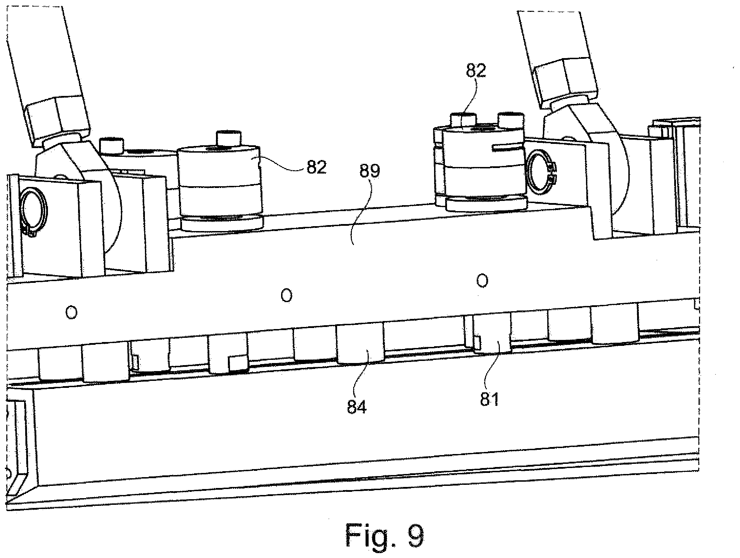

On voit notamment sur les figures 8 et 9 que la butée de réglage 82 peut être plus ou moins vissée sur une partie filetée du guide 81 s'étendant en arrière de la traverse 89 et immobilisée dans la position angulaire choisie par une vis de blocage 87 qui vient rapprocher deux parties de la butée séparées par une fente 88, pour les serrer sur le guide 81.

Les guides 81 sont vissés à l'avant dans l'enclume correspondante.

En agissant sur les butées 82, on peut régler l'orientation au repos de l'enclume, et la reculer plus ou moins relativement à la traverse ; ce principe permet outre de régler la précontrainte des ressorts, de pré régler le parallélisme entre les enclumes 30 et 40 et la sonotrode 20.

Des ressorts hélicoïdaux 84 sont disposés de façon à solliciter élastiquement chaque enclume 30 ou 40 en direction de la sonotrode 20, jusqu'à une position de repos définie par le réglage des butées 82 et leur venue en appui contre la traverse 89.

Des pions 80 fixés sur chaque enclume 30 ou 40 assurent le maintien des ressorts 84 en place. Ces derniers s'interposent entre le fond d'un renfoncement correspondant de la traverse 89 de la structure de support 54 et la face arrière de l'enclume 30 ou 40.

Le guidage de chaque enclume 30 ou 40 par les guides 81 et douilles 86 s'effectue avec un jeu radial suffisant pour autoriser un déplacement angulaire de l'enclume dans un plan qui est sensiblement perpendiculaire à la direction de déplacement D de la structure flexible.

Ce jeu est par exemple de 0,05 à 0,2 mm pour un diamètre de guidage de 15 mm.

Dans l'exemple considéré, l'un des ressorts 84 est d'axe contenu dans le plan médian de l'enclume correspondante. Les deux autres sont disposés symétriquement par rapport à ce plan, et les deux guides 81 également.

La course en déplacement de l'enclume 30 ou 40 relativement à la structure de support 54, permise par les ressorts 84, est par exemple comprise entre 0,1 et 10 mm.

L'écart entre les bords avant 33, 43 des enclumes 30, 40, lors d'une opération de soudure, est par exemple compris entre 2 et 40 mm, mieux entre 6 et 8 mm. Cet écart correspond à celui des lignes de soudure qui sont réalisées.

La longueur de chaque enclume 30 ou 40 est par exemple comprise entre 10 et 500mm.

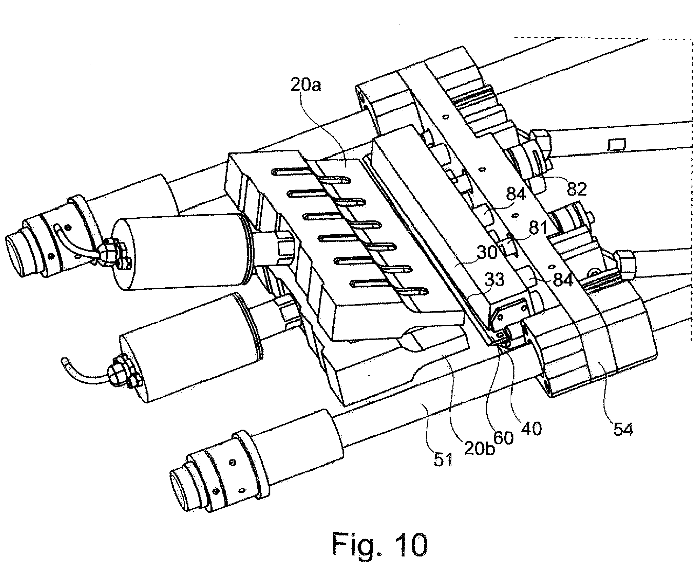

Dans une variante, illustrée à la figure 10, le dispositif comporte deux sonotrodes 20a et 20b associées chacune à une enclume respective 30 ou 40.

Chaque enclume 30 ou 40 peut être mobile relativement à la structure de support 54.

En variante, les enclumes 30 ou 40 sont fixes relativement à la structure de support 54 et ce sont les sonotrodes 20a et 20b qui sont mobiles l'une relativement à l'autre grâce à un mécanisme adapté non illustré, de façon à ce que chaque entrefer défini entre une sonotrode et l'enclume correspondante puisse s'adapter à la structure flexible présente dans l'entrefer. Cela revient à une inversion cinématique par rapport au cas où ce sont les enclumes qui sont mobiles relativement à la structure de support.

Chaque sonotrode 20a ou 20b peut ainsi être montée avec une possibilité de déplacement relativement à une structure de support associée, non représentée, dans un plan parallèle à la ligne de soudure correspondante, de préférence avec deux degrés de liberté, l'un en translation et l'autre en rotation.

Les sonotrodes 20a et 20b s'étendent selon des axes respectifs dont l'un peut être parallèle à la direction de déplacement de la sonotrode lors de son rapprochement de l'enclume pour effectuer l'opération de soudure et l'autre faire un angle aigu, de préférence inférieur à 60°, avec cet axe.

D'une façon générale, il peut être intéressant de limiter le débattement vers le haut ou vers le bas des enclumes 30 et 40 tout en ayant le débattement latéral recherché, permettant à chaque enclume de conserver deux degrés de liberté de mouvement relativement à la structure de support 54.

L'utilisation de chariots à billes plutôt que d'un guidage à douilles est préférable à cet égard.

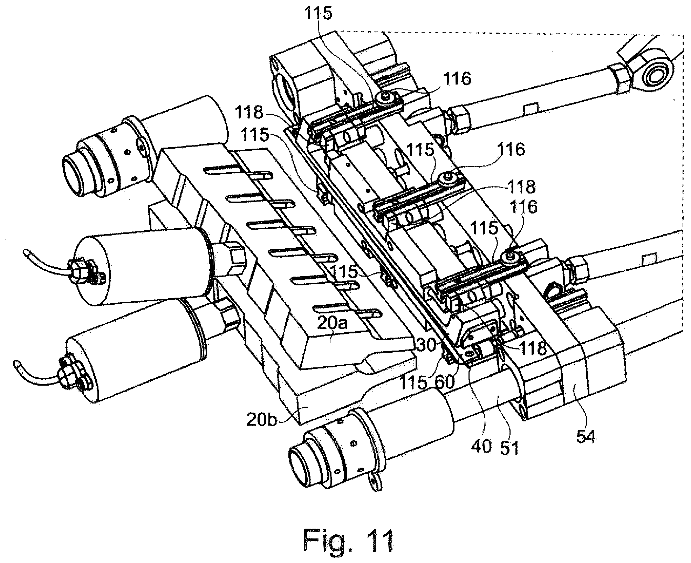

On a illustré l'utilisation de chariots à billes sur la figure 11. Bien que cet exemple concerne une variante du dispositif de la figure 10 à deux sonotrodes 20a et 20b, la description qui suit vaut pour l'exemple des figures 1 à 9 à une seule sonotrode 20 et deux enclumes 30 et 40.

Le guidage s'effectue à l'aide de rails 115 qui sont fixés sur la structure de support 54 à l'aide notamment de vis 116. Ces rails 115 s'étendent parallèlement entre eux et sont de préférence, comme illustré, au nombre de trois par enclume, avec un rail central et deux rails latéraux. Ces derniers sont de préférence disposés symétriquement l'un de l'autre par rapport à l'axe du rail central.

Chaque enclume porte des chariots à billes 118 dont les billes circulent sur les rails 115.D'une façon générale, on peut donner au bord avant 33 ou 43 de chaque enclume toute forme adaptée convenant à la soudure à réaliser, et adopter une forme plus ou moins biseautée ou arrondie.

De préférence, les deux enclumes 30 et 40 sont mobiles relativement à la structure de support 54, mais en variante, l'une seulement l'est.

Les ressorts hélicoïdaux 84 peuvent être remplacés par tous autres organes de rappel élastique, par exemple des vérins à gaz ou des ressorts à lame, ou par un ou plusieurs actionneurs commandés électriquement par exemple.

L'une des enclumes peut être mobile par rapport à l'autre enclume en étant portée par celle-ci.

De préférence, comme illustré sur les figures qui viennent d'être décrites, la mobilité de chaque enclume 30 ou 40 est assurée par un guidage approprié de l'ensemble de l'enclume, qui se déplace en bloc de façon indéformable. Il est toutefois possible d'utiliser des enclumes déformables élastiquement au moins en partie de façon à permettre au bord avant de l'enclume d'être mobile relativement au reste de l'enclume, lequel peut être fixe relativement à la structure de support. Dans ce cas, le recul partiel de l'enclume sous la poussée de la sonotrode peut être obtenu par une déformation locale de l'enclume.

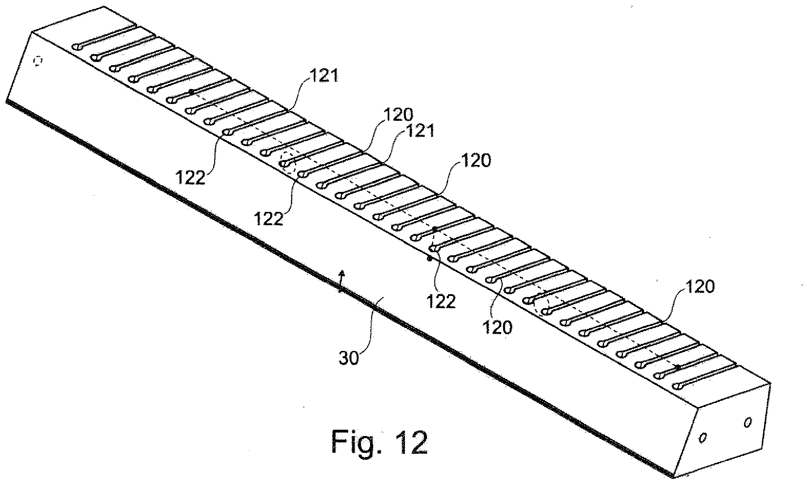

La figure 12 représente un exemple d'une telle enclume 30.

On voit sur cette figure que l'enclume peut comporter une succession de fentes 120 parallèles entre elles, qui débouchent à une extrémité 121 sur la face arrière de l'enclume et à l'extrémité opposée sur un trou 122. Les fentes 120 et trous 122 s'étendent sur toute la hauteur de l'enclume. La présence des fentes confère une certaine déformabilité à l'enclume, dans un plan parallèle à la ligne de soudure et perpendiculaire à la direction de défilement de la structure flexible dans l'entrefer.

La déformation de l'enclume peut s'effectuer en restant dans les limites d'élasticité du matériau de l'enclume, ce qui assure la réversibilité de la déformation.

L'épaisseur de matière séparant les trous 122 de la face avant de l'enclume est choisie en fonction de la déformabilité recherchée.

L'enclume peut être montée de façon à reculer d'un mouvement d'ensemble de translation sous la poussée exercée par la sonotrode. Dans ce cas, la déformabilité conférée par la présence des fentes rend moins utile la présence de deux degrés de liberté dans le guidage de l'enclume relativement à la structure de support ; un seul degré de liberté en translation d'avant en arrière suffit.

Le dispositif peut être dépourvu d'outil de coupe disposé entre les deux enclumes. Dans ce cas, la sonotrode est par exemple réalisée avec une lame s'engageant entre les deux enclumes, et servant d'outil de coupe.

On peut utiliser divers types de films, et par exemple ceux listés dans le tableau ci-dessous.

| **Type** | **Matières** |
|---|---|
| Monocouche | PE |
| | PET |
| | PP |
| | PEHD |
| Complexe | OPA/PP |
| | OPA/PE |
| | OPA/OPP |
| | OPET/PE-EVOH-PE |
| | PET/OPA/PP |
| | PET/ALU/PP |
| | PET/ALU/PE |
| | PET/PE |
| | PET/PP |
| | PAO/EVE |
| | PAO/EVM |
| | PAO/PEH |
| | PAO/PP |
| | PAO/PE |

L'expression « comportant un » doit se comprendre comme étant synonyme de « comprenant au moins un », sauf si le contraire est spécifié.

## Revendications

1. Dispositif (10) de soudure par ultrasons d'une structure flexible (F), notamment tubulaire, à conformer en sachets, ce dispositif comportant au moins deux entrefers définis chacun entre une sonotrode (20) et une enclume (30,40) portées par des structures de support respectives (28,54) dont l'écartement varie entre une position rapprochée de soudure et une position écartée de défilement de la structure flexible, entrefers dans lesquels la structure flexible à souder est destinée à être reçue pour réaliser au moins deux lignes de soudure, avec pour chaque entrefer au moins l'une d'une enclume et d'une sonotrode associées à cet entrefer qui est au moins partiellement mobile relativement à une structure de support (54) de cette enclume ou sonotrode, **caractérisé en ce que** les deux enclumes peuvent se déplacer indépendamment l'une de l'autre.

2. Dispositif selon la revendication 1, à la fois la ou les sonotrodes et la ou les enclumes étant mobiles de façon cyclique dans une direction (X) sensiblement perpendiculaire à une direction de défilement (D) de la structure flexible au sein du dispositif, entre une position éloignée permettant de faire défiler la structure flexible, et
une position rapprochée de soudure.

3. Dispositif selon l'une des revendications 1 et 2, l'une au moins des enclumes (30,40) étant solidaire d'une structure de support (54), déplacée par un mécanisme en translation dans une direction la rapprochant ou l'éloignant de la sonotrode (20), et de préférence chacune des enclumes étant solidaire d'une structure de support (54) déplacée par un mécanisme en translation dans une direction la rapprochant ou l'éloignant de la sonotrode.

4. Dispositif selon l'une quelconque des revendications 1 à 3, les deux entrefers étant définis par une même sonotrode (20) et par deux enclumes respectives (30,40), notamment une sonotrode présentant deux avancées (24,25) disposées respectivement en regard de bords avant (33,43) des sonotrodes, et séparées par une gorge (26).

5. Dispositif selon l'une quelconque des revendications précédentes, l'une au moins d'une enclume et d'une sonotrode définissant ensemble un entrefer, étant libre de pivoter, de préférence dans un plan perpendiculaire à une direction de défilement (D) de la structure flexible au sein du dispositif.

6. Dispositif selon l'une quelconque des revendications précédentes, la ou chacune des enclumes et/ou sonotrodes étant libre de pivoter, de préférence dans un plan perpendiculaire à une direction de défilement (D) de la structure flexible au sein du dispositif, le pivotement étant de préférence accompagné par la déformation d'au moins un organe de rappel élastique (84) vers une position de repos.

7. Dispositif selon la revendication 5 ou 6, la possibilité de pivotement de la ou de chaque enclume et/ou de la ou de chaque sonotrode, étant obtenue grâce à un jeu de guidage de la ou de chaque enclume et/ou de la ou de chaque sonotrode.

8. Dispositif selon la revendication 7, la possibilité de pivotement étant obtenue grâce à un jeu de guidage entre des rails (115) et des chariots à billes (118) se déplaçant sur ces rails, notamment entre au moins deux rails (115) et deux chariots à billes (118) par enclume, et de préférence au moins trois rails (115) et trois chariots à billes (118) par enclume.

9. Dispositif selon l'une quelconque des revendications précédentes, comportant au moins un organe de rappel élastique (84) pour solliciter en rapprochement l'enclume et la sonotrode associées à un même entrefer, et de préférence au moins l'une des enclumes, mieux chacune des enclumes, étant sollicitée élastiquement en direction d'une même sonotrode (20), de préférence par au moins un ressort hélicoïdal (84).

10. Dispositif selon la revendication 9, au moins l'une des enclumes, mieux chaque enclume, étant sollicitée en direction d'une même sonotrode (20) par au moins deux ressorts de rappel (84), de préférence hélicoïdaux, disposés de part et d'autre d'un plan médian de l'enclume, et mieux par trois ressorts hélicoïdaux (84) dont l'un est situé dans ledit plan médian.

11. Dispositif selon l'une des revendications 9 et 10, comportant des moyens de réglage (82) d'une position de repos dans laquelle est sollicitée l'enclume ou la sonotrode par le ou les organes de rappel élastique (84), lorsque la sonotrode et l'enclume sont éloignées, entre deux opérations de soudure, notamment des butées à vis.

12. Dispositif selon l'une quelconque des revendications précédentes, comportant au moins une partie d'un dispositif de coupe (60), disposée entre les deux enclumes.

13. Dispositif selon l'une quelconque des revendications précédentes, chaque enclume (30,40) étant régulée en température, notamment par une circulation d'un fluide au sein d'au moins un canal interne à l'enclume.

14. Dispositif selon l'une quelconque des revendications précédentes, l'une au moins des enclumes (30,40) comportant une succession de fentes (120) lui conférant de la flexibilité, notamment des fentes orientées perpendiculairement à la direction de défilement de la structure flexible dans l'entrefer.

15. Procédé de soudure par ultrasons d'une structure flexible (F), à l'aide d'un dispositif (10) selon l'une quelconque des revendications précédentes, dans lequel on effectue simultanément deux lignes de soudure parallèles (L_{bi+1}, Lₜᵢ) en pinçant la structure à souder dans chaque entrefer entre la sonotrode et l'enclume correspondante, la structure flexible étant de préférence formée d'un film en matière thermoplastique, notamment monocouche, l'épaisseur du film (F) étant de préférence comprise entre 10 et 100 microns, le sachet (Sᵢ) contenant de préférence un produit alimentaire, notamment des feuilles de salade ou des crudités ou un produit pulvérulent, au moins l'une des enclumes, et de préférence chaque enclume (30,40), étant déplacée relativement à une structure de support (54) de ces enclumes par une poussée exercée par la sonotrode (20), lors de la réalisation des lignes de soudure, la température des enclumes (30,40) étant de préférence régulée.

## Patentansprüche

1. Vorrichtung (10) zur Ultraschallschweißung einer flexiblen Struktur (F), insbesondere einer rohrförmigen flexiblen Struktur, zur Bildung von Beuteln, wobei die Vorrichtung wenigstens zwei Luftspalte aufweist, die jeweils zwischen einer Sonotrode (20) und einem Amboss (30, 40) gebildet sind, die von jeweiligen Tragstrukturen (28, 54) gehalten sind, deren Abstand zwischen einer angenäherten Schweißposition und einer abgerückten Position zum Weitertransport der flexiblen Struktur variiert, Luftspalten, in denen die zu schweißende flexible Struktur aufgenommen zu werden bestimmt ist, um wenigstens zwei Schweißlinien zu bilden, mit, für jeden Luftspalt, dem Amboss und/oder der Sonotrode, die diesem Luftspalt zugeordnet sind, der wenigstens teilweise relativ zu einer Tragstruktur (54) dieses Ambosses oder dieser Sonotrode beweglich ist, **dadurch gekennzeichnet, dass** die beiden Ambosse unabhängig voneinander bewegbar sind.

2. Vorrichtung nach Anspruch 1, bei der zugleich die Sonotrode oder Sonotroden und der Amboss oder die Ambosse zyklisch in einer Richtung (X) im wesentlichen rechtwinklig zu einer Transportrichtung (D) der flexiblen Struktur im Inneren der Vorrichtung beweglich sind zwischen einer abgerückten Position, die den Transport der flexiblen Struktur ermöglicht, und einer angenäherten Schweißposition.

3. Vorrichtung nach einem der Ansprüche 1 und 2, bei der wenigstens einer der Ambosse (30, 40) mit einer Tragstruktur (54) verbunden ist, die durch einen Mechanismus in Translation in einer Richtung der Annäherung an die Sonotrode (20) oder des Abrückens von der Sonotrode verstellt wird, wobei vorzugsweise jeder der Ambosse mit einer Tragstruktur (54) verbunden ist, die durch einen Mechanismus in Translation in einer Richtung der Annäherung an oder des Abrückens von der Sonotrode verstellt wird.

4. Vorrichtung nach einem der Ansprüche 1 bis 3, bei der die beiden Luftspalte durch eine gemeinsame Sonotrode (20) und zwei jeweilige Ambosse (30, 40) definiert werden, insbesondere eine Sonotrode, die zwei Vorsprünge (24, 25) aufweist, die jeweils gegenüberliegend zu vorderen Rändern (33, 43) der Sonotroden angeordnet und durch eine Nut (26) getrennt sind.

5. Vorrichtung nach einem der vorstehenden Ansprüche, bei der wenigstens einer der Ambosse und eine Sonotrode, die zusammen einen Luftspalt definieren, frei sind zu einer Schwenkbewegung, vorzugsweise in einer Ebene rechtwinklig zu der Transportrichtung (D) der flexiblen Struktur im Inneren der Vorrichtung.

6. Vorrichtung nach einem der vorstehenden Ansprüche, bei welcher der Amboss oder jeder der Ambosse und/oder die Sonotrode oder jede der Sonotroden frei ist zu einer Schwenkbewegung, vorzugsweise in einer Ebene rechtwinklig zu einer Transportrichtung (D) der flexiblen Struktur im Inneren der Vorrichtung, wobei die Schwenkbewegung vorzugsweise von der Verformung wenigstens eines elastischen Rückstellorgans (84) in eine Ruhestellung begleitet ist.

7. Vorrichtung nach Anspruch 5 oder 6, bei der die Schwenkbarkeit des Ambosses oder jedes Ambosses und/oder der Sonotrode oder jeder Sonotrode erreicht wird durch einen Satz von Führungsmitteln für den Amboss oder jeden Amboss und/oder die Sonotrode oder jede Sonotrode.

8. Vorrichtung nach Anspruch 7, bei der die Schwenkbarkeit erreicht wird durch einen Satz von Führungsmitteln zwischen Schienen (115) und kugelgelagerten Wagen (118), die sich auf den Schienen bewegen, insbesondere zwischen wenigstens zwei Schienen (115) und je zwei kugelgelagerten Wagen (118) je Amboss, vorzugsweise wenigstens drei Schienen (115) und drei kugelgelagerten Wagen (118) je Amboss.

9. Vorrichtung nach einem der vorstehenden Ansprüche, mit wenigstens einem elastischen Rückstellorgan (84) zum Vorspannen des Ambosses und der Sonotrode, die dem gleichen Luftspalt zugeordnet sind, im Sinne einer Annäherung, wobei vorzugsweise wenigstens einer der Ambosse, besser jeder der Ambosse, elastisch in Richtung derselben Sonotrode (20) vorgespannt ist, vorzugsweise mit Hilfe wenigstens einer Schraubenfeder (84).

10. Vorrichtung nach Anspruch 9, bei der wenigstens einer der Ambosse, besser jeder Amboss, in Richtung derselben Sonotrode (20) vorgespannt ist mit Hilfe von wenigstens zwei Rückstellfedern (84), vorzugsweise Schraubenfedern, die beiderseits einer Medianebene des Ambosses angeordnet sind, und besser mit drei Schraubenfedern (84), von denen sich eine in der genannten Medianebene befindet.

11. Vorrichtung nach einem der Ansprüche 9 und 10, mit Steuermitteln (82) für eine Ruhestellung, in welche der Amboss oder die Sonotrode durch das elastische Rückstellorgan oder die elastischen Rückstellorgane (84) vorgespannt ist, während die Sonotrode und der Amboss zwischen zwei Schweißoperationen voneinander entfernt sind, insbesondere Anschlagvorrichtungen in der Form von Schrauben.

12. Vorrichtung nach einem der vorstehenden Ansprüche, mit wenigstens einem Teil einer Schneidvorrichtung (60), die zwischen den beiden Ambossen angeordnet ist.

13. Vorrichtung nach einem der vorstehenden Ansprüche, bei der jeder Ambosse (30, 40) temperaturgeregelt ist, insbesondere durch Umwälzung eines Fluids in wenigstens einem inneren Kanal des Ambosses.

14. Vorrichtung nach einem der vorstehenden Ansprüche, bei der mindestens einer der Ambosse (30, 40) eine Folge von Schlitzen 120 aufweist, die ihm die Flexibilität geben, insbesondere Schlitzen, die rechtwinklig zu der Transportrichtung der flexiblen Struktur in dem Luftspalt angeordnet sind.

15. Verfahren zum Ultraschallschweißen einer flexiblen Struktur (F) mit Hilfe einer Vorrichtung (10) nach einem der vorstehenden Ansprüche, bei dem man gleichzeitig wenigstens zwei parallele Schweißlinien (L_{bi+1}, Lₜᵢ) bildet, indem die zu schweißende Struktur in jedem Luftspalt zwischen der Sonotrode und dem zugehörigen Amboss geklemmt wird, wobei die flexible Struktur vorzugsweise durch einen Film aus thermoplastischem, insbesondere einschichtigem Material gebildet wird, wobei die Dicke des Films (F) vorzugsweise zwischen 10 und 100 µm beträgt, der Beutel (Sᵢ) vorzugsweise ein Lebensmittelprodukt enthält, insbesondere Salatblätter oder Rohkost oder ein pulverförmiges Produkt, wobei wenigstens einer der Ambosse, vorzugsweise jeder Amboss (30, 40) bei der Bildung der Schweißlinien mit Hilfe eines von der Sonotrode (20) ausgeübten Schubes relativ zu einer Tragstruktur (54) für die Ambosse bewegt wird, wobei die Temperatur der Ambosse (30, 40) vorzugsweise geregelt wird.

## Claims

1. Device (10) for ultrasonic welding of a flexible structure (F), especially tubular shaped, to be conformed into sachets, this device including at least two airgaps each defined between a sonotrode (20) and an anvil (30, 40) carried by respective support structures (28, 54) the distance between which varies between a close together welding position and a spaced apart flexible structure movement position, in which airgaps the flexible structure to be welded is intended to be received to produce at least two weld lines, wherein for each airgap an anvil and/or a sonotrode both associated with this airgap is at least partially mobile relative to a support structure of this anvil or sonotrode, **characterized in that** the two anvils may be movable independently of each other.

2. Device according to Claim 1, the sonotrode(s) and the anvil(s) being simultaneously and cyclically mobile in a direction (X) substantially perpendicular to a direction (D) of movement of the flexible structure within the device between a spaced-apart position allowing movement of the flexible structure and a close together welding position.

3. Device according to any of Claims 1 and 2, at least one of the anvils (30, 40) being fastened to a support structure (54), moved by a mechanism in translation in a direction moving it toward or away from the sonotrode (20), and each of the anvils preferably being fastened to a support structure (54) moved by a mechanism in translation in a direction toward or away from the sonotrode.

4. Device according to any of Claims 1 to 3, the two airgaps being defined by the same sonotrode (20) and by respective anvils (30, 40), particularly a sonotrode having two advanced portions (24, 25) facing respective front edges (33, 43) of the sonotrodes and separated by a groove (26).

5. Device according to any of the preceding Claims, at least one of an anvil and a sonotrode together defining an airgap, being free to pivot, in a plane perpendicular to a direction of movement (D) of the flexible structure within the device.

6. Device according to any of the preceding Claims, the or each anvil and/or sonotrode being free to pivot in a plane perpendicular to a direction of movement (D) of the flexible structure within the device, the pivoting being accompanied by the deformation of at least one elastic return member (84) toward a rest position.

7. Device according to Claim 5 or 6, the possibility of pivoting of the or each anvil and/or the or each sonotrode being obtained by virtue of play in the guidance of the or each anvil and/or the or each sonotrode.

8. Device according to Claim 7, the possibility of pivoting being obtained by virtue of play between rails (115) and recirculating-ball carriages (118) moving on these rails, notably between at least two rails (115) and two recirculating-ball carriages (118) per anvil.

9. Device according to any of the preceding Claims, including at least one elastic return member (84) for urging the anvil and the sonotrode associated with the same airgap toward each other, and preferably at least one of the anvils, better each of the anvils, being spring-loaded in the direction of the same sonotrode (20), preferably by at least one coil spring (84).

10. Device according to Claim 9, at least one of the anvils, better each anvil, being spring-loaded in the direction of the same sonotrode (20) by at least two return springs (84), preferably coil springs, disposed on either side of a median plane of the anvil, and better by three coil springs (84) among which one is in said median plane.

11. Device according to any of Claims 9 and 10, including means for adjustment (82) of a rest position into which the anvil or the sonotrode is urged by the elastic return member(s) (84) when the sonotrode and the anvil are spaced apart between two welding operations, notably screw-type stops.

12. Device according to any of the preceding Claims, including at least part of a cutting device (60) between the two anvils.

13. Device according to any of the preceding Claims, each anvil (30, 40) being temperature-regulated, notably by a circulation of a fluid in at least one passage internal to the anvil.

14. Device according to any of the preceding Claims, at least one of the anvils (30, 40) including a succession of slots (120) conferring flexibility on it, notably slots that are oriented perpendicularly to the direction of movement of the flexible structure in the anvil.

15. Method for ultrasonic welding of a flexible structure (F), by means of a device (10) according to any of the preceding claims, in which two parallel weld lines (L_{bi+1}, Lₜᵢ) are effected simultaneously with the structure to be welded clamped in each airgap between the sonotrode and the corresponding anvil, the flexible structure being preferably formed of a thermoplastic material film, notably monolayer, the thickness of the film (F) being between 10 and 100 microns, the sachet (Sᵢ) containing preferably food product, notably salad leaves or raw vegetables or a powder product, at least one of the anvils, and preferably each anvil (30, 40), being moved relative to a support structure (54) of these anvils by a thrust exerted by the sonotrode (20) during the production of the weld lines, the temperature of the anvils (30, 40) being preferably regulated.
